# EUROPÄISCHE PATENTSCHRIFT

(11) **EP 1 189 090 B1**
(45) Veröffentlichungstag und Bekanntmachung des Hinweises auf die Patenterteilung: **13.06.2007**
(21) Anmeldenummer: 01120467.4
(22) Anmeldetag: 28.08.2001
(51) Int. Cl.: G02B 21/06, G02B 21/00

(54) **Optische Anordnung zum Beleuchten von Objekten**
Optical assembly for illuminating objects
Dispositif optique pour l'illumination d'objets

(30) Priorität: 18.09.2000 DE 10046410
(43) Veröffentlichungstag der Anmeldung: 20.03.2002
(73) Patentinhaber: Leica Microsystems CMS GmbH, 35578 Wetzlar (DE)
(72) Erfinder: Bewersdorf, Jörg, 69121 Heidelberg (DE); Gugel, Hilmar, 69221 Dossenheim (DE); Hoffmann, Jürgen, Dr., 65191 Wiesbaden (DE)
(74) Vertreter: Reichert, Werner Franz

(56) Entgegenhaltungen:
- EP-A- 0 491 289
- EP-A- 1 130 439
- US-A- 5 386 112
- US-A- 5 671 085

## Beschreibung

Die vorliegende Erfindung betrifft eine optische Anordnung zum Beleuchten von Objekten, insbesondere von Fluoreszenzobjekten, vorzugsweise in Verbindung mit einem konfokalen oder einem doppelkonfokalen Rastermikroskop, mit einem Beleuchtungsstrahlengang einer Lichtquelle, einem Detektionsstrahlengang eines Detektors und einem den Detektionsstrahlengang vereinigenden Bauteil.

Vorrichtungen der gattungsbildenden Art sind in der Praxis bekannt und werden beispielsweise in der EP 0 491 289 oder der US 5 671 085 verwendet. Aus beiden Druckschriften sind Mikroskopanordnungen bekannt, bei denen ein Objekt mit zwei einander entgegengesetzt angeordneten Mikroskopobjektiven beleuchtet bzw. detektiert wird. Zur Beleuchtung wird der Beleuchtungsstrahlengang in zwei Teilstrahlengänge aufgespalten, so dass das Objekt von einander entgegengesetzt verlaufenden Lichtstrahlen gleichzeitig beleuchtet werden kann. Das Licht der beiden Beleuchtungsteilstrahlengänge interferiert im Objektbereich, wodurch das Objekt mit einem verbesserten Auflösungsvermögen beleuchtet werden kann. Das vom Objekt kommende Licht - beispielsweise Fluoreszenzlicht -, das von den Mikroskopobjektiven aufgesammelt wird, durchläuft nun die Beleuchtungsteilstrahlengänge in entgegengesetzter Richtung. An dem das Beleuchtungslicht aufteilende Bauteil wird nun das vom Objekt kommende Licht vereinigt und teilweise dem Detektor zugeführt.

Bei dem den Beleuchtungsstrahlengang aufteilenden bzw. den Detektionsstrahlengang vereinigenden Bauteil handelt es sich üblicherweise um Strahlteiler, die beispielsweise in Form gekitteter Strahlteilerwürfel verwendet werden. Bei diesen Bauteilen wird das einfallende Licht zu gleichen Teilen in einen in Geradeausrichtung transmittierten und einen im Winkel von 90 Grad abgelenkten Strahl aufgeteilt. Bei dem vom Objekt kommenden, an dem Strahlteilerwürfel zu vereinigenden Detektionslicht wird das Licht eines jeden Teilstrahlengangs in einen transmittierten und einen abgelenkten Teilstrahl aufgespalten, so dass von jedem Detektionslichtstrahl nur jeweils die Hälfte zum Detektor gelangt. Die andere Hälfte des vom Objekt kommenden Lichts kann nicht mit dem Detektor nachgewiesen werden und geht daher ungenutzt verloren.

Der vorliegenden Erfindung liegt daher die Aufgabe zugrunde, eine optische Anordnung der gattungsbildenden Art derart auszugestalten und weiterzubilden, dass das vom Objekt kommende Licht zumindest weitgehend verlustfrei an dem den Detektionsstrahlengang vereinigenden Bauteil vereinigt und in eine Ausbreitungsrichtung geleitet werden kann.

Die erfindungsgemäße Vorrichtung der gattungsbildenden Art löst die voranstehende Aufgabe durch die Merkmale des Patentanspruchs 1. Danach ist eine solche optische Anordnung dadurch gekennzeichnet, dass das vom Objekt kommende Licht an dem den Detektionsstrahlengang vereinigenden Bauteil bezüglich des für den Detekor wirksamen Strahlquerschnitts zumindest weitgehend überlappend in eine Ausbreitungsrichtung vereinigbar ist, wobei Mittel zur Beeinflussung der Phase des vom Objekt kommenden Lichts vorgesehen sind, die zumindest in einem Teilstrahlengang des Detektionsstrahlengangs angeordnet sind.

Erfindungsgemäß ist zunächst erkannt worden, dass nahezu das gesamte vom Objekt kommende Detektionslicht an dem den Detektionsstrahlengang vereinigenden Bauteil vereinigt und in eine Ausbreitungsrichtung geleitet werden kann, wenn das Detektionslicht an der strahlvereinigenden Grenzschicht mit einer definierten Phasenbeziehung, beispielsweise phasengleich, ankommt. Hierzu sind zum einen die zu vereinigenden Detektionsstrahlengänge bezüglich ihrer optischen Länge entsprechend abzustimmen, beispielsweise durch gleichlange optische Wege. Weiterhin sind Mittel zur Beeinflussung der Phase des Detektionslichts vorgesehen, die zumindest in einem Teilstrahlengang angeordnet sind und Phasenunterschiede der Detektionsteilstrahlengänge auszugleichen vermögen. Wenn nun das vom Objekt kommende Detektionslicht aus den einzelnen Teilstrahlengängen an dem den Detektionsstrahlengang vereinigenden Bauteil ankommt und die Phasenbeziehung der beiden Detektionsteilstrahlen entsprechend eingestellt ist, interferiert das die beiden Teilstrahlengänge durchlaufende Detektionslicht konstruktiv an dem den Detektionsstrahlengang vereinigenden Bauteil. In vorteilhafter Weise breitet sich bei konstruktiver Interferenz das Detektionslicht lediglich in eine Richtung aus, nämlich in Richtung des Detektors. In die andere Richtung breitet sich entsprechend kein Licht aus, da für diese Ausbreitungsrichtung destruktive Interferenz vorliegt.

Die Vereinigung des die einzelnen Teilstrahlengänge durchlaufenden Lichts erfolgt hierbei üblicherweise an einem Bereich der Grenzschicht des den Detektionsstrahlengang vereinigenden Bauteils, der von beiden Teilstrahlengängen gleichermaßen oder zumindest weitgehend überlappend mit Detektionslicht beaufschlagt wird. Dieser Grenzschichtbereich ist im Allgemeinen auch die für die Detektion bzw. für den Detektor wirksame Fläche, die hier in diesem Zusammenhang als wirksamer Strahlquerschnitt bezeichnet wird, der nicht notwendigerweise orthogonal zur optischen Achse orientiert sein muss.

Üblicherweise wird als das den Detektionsstrahlengang vereinigende Bauteil ein Basissubstrat verwendet, das an mindestens einer Seite metallisch, dielektrisch oder metallisch-dielektrisch beschichtet ist. Auch entsprechende Strahlteilerwürfel mit metallischer, dielektrischer oder metallisch-dielektrischer Hybridbeschichtung werden eingesetzt. Eine wichtige Rolle bei der konstruktiven bzw. destruktiven Interferenz an dem den Detektionsstrahlengang vereinigenden Bauteil spielt der Phasensprung, der bei einer Reflexion an einem Übergang zu einem optisch dichteren Medium 180 Grad beträgt, während der Phasensprung bei einer Reflexion an einem Übergang zu einem optisch dünneren Medium 0 Grad beträgt, d.h. kein Phasensprung auftritt.

Zur optimalen Strahlvereinigung in eine Ausbreitungsrichtung ist mindestens ein Bauteil, beispielsweise das den Detektionsstrahlengang vereinigende Bauteil, derart ausgestaltet und/oder im Strahlengang angeordnet, dass es einen entsprechenden Reflexions- und/oder Transmissionsgrad aufweist. Zum einen kann das durch eine entsprechende Beschichtung des Bauteils erzielt werden, eine Anordnung bzw. Ausrichtung des Bauteils unter Berücksichtigung der Fresnell'schen Gleichungen ist hierzu ebenfalls vorgesehen.

Eine zumindest weitgehend verlustfreie Vereinigung des vom Objekt kommenden Lichts in eine Ausbreitungsrichtung wird auch dadurch begünstigt, dass mindestens ein Bauteil derart im Strahlengang angeordnet ist, dass das auf dieses Bauteil auftreffende Licht einen entsprechenden Einfallswinkel aufweist. Hierzu ist im Fall eines Strahlteilers als das den Detektionsstrahlengang vereinigende Bauteil in erster Linie das Snellius'sche Brechungsgesetz einschlägig.

Zur zumindest weitgehend verlustfreien Vereinigung des vom Objekt kommenden Lichts in eine Ausbreitungsrichtung ist mindestens ein Bauteil derart ausgestaltet und/oder im Strahlengang angeordnet, dass hierdurch ein entsprechender Phasenabgleich erzielbar ist. Hierbei könnte es sich beispielsweise um einen Spiegel handeln, der über die einer Wellenlänge des Detektionslichts entsprechenden Strecke nannometergenau verstellt werden kann. Hierdurch ist ein entsprechender Phasenabgleich des Detektionsteilstrahlengangs, in dem dieser Spiegel angeordnet ist, bezüglich des anderen Detektionsteilstrahlengangs möglich.

Ganz allgemein kann das Bauteil das den Detektionsstrahlengang vereinigende Bauteil sein. Es wäre hierzu entsprechend zu beschichten, so dass der Reflexions- und Transmissionsgrad bei vorgegebenen Einfallswinkel geeignet zu wählen ist. Ein Phasenabgleich könnte ebenfalls mit dem den Detektionsstrahlengang vereinigenden Bauteil durch entsprechende nannometergenaue Verstellung erzielt werden.

Bei dem Bauteil könnte es sich um ein metallisch oder dielektrisch beschichtetes Bauteil und/oder um ein Bauteil handeln, dass mit einer dielektrischen oder metallisch-dielektrischen Hybridbeschichtung versehen ist. Insbesondere bei dem den Detektionsstrahlengang vereinigenden Bauteil könnte es sich um ein mit einer metallisch-dielektrischer Hybridbeschichtung versehenes Bauteil handeln.

In einer bevorzugten Ausführungsform ist vorgesehen, dass die Strahlteileranordnungen derart ausgestaltet und/oder im Strahlengang angeordnet sind, dass das Teilungs- und/oder Vereinigungsverhältnis für s- und p-polarisiertes Licht nahezu gleich ist. Dies ist insbesondere dann von großer Bedeutung, wenn das zu vereinigende Licht Fluoreszenzlicht beliebiger Polarisationsrichtung ist, da bei nahezu gleichem Vereinigungsverhältnis für s- und p-polarisiertes Licht die angestrebte Interferenz des Fluoreszenzlichts sehr effizient erfolgt, wodurch diese Vereinigung des vom Objekt kommenden Lichts nahezu verlustfrei in eine Ausbreitungsrichtung erfolgen kann.

Eine Grundbedingung zur konstruktiven Interferenz des zu vereinigenden Detektionslichts ist zumindest dann weitgehend erfüllt, wenn das die beiden Teilstrahlengänge durchlaufende, vom Objekt kommende Licht an der Grenzschicht des den Detektionsstrahlengang vereinigenden Bauteils eine definierte Phasenbeziehung aufweist. Diese definierte Phasenbeziehung ist in erster Linie von den Eigenschaften der Grenzschicht des den Detektionsstrahlengang vereinigenden Bauteils abhängig, so dass im Konkreten vorgesehen ist, die notwendige, definierte Phasenbeziehung einzustellen. Hierzu könnte die optische Weglänge mindestens eines der Teilstrahlengänge veränderbar sein. Eine solche Variation der optischen Weglänge könnte mit einer bereits erwähnten Verstellung eines in einem Teilstrahlengang angeordneten Spiegels erfolgen. Eine weitergehende bzw. feinere Einstellung der Phasenanpassung mit anderen Mitteln bzw. anderen im Strahlengang angeordneten Bauteilen ist ebenfalls vorgesehen.

Von den Eigenschaften der Grenzschicht des den Detektionsstrahlengang vereinigenden Bauteils hängt es ab, ob das den einen Teilstrahlengang durchlaufende, vom Objekt kommende Licht bei seiner Transmission oder Reflexion eine Veränderung der Phase erfährt oder nicht. So könnte beispielsweise der reflektierte Anteil gegenüber dem transmittierten Anteil des vom Objekt kommenden Lichts einen Phasensprung von 180 Grad erfahren. Die Phase des den anderen Teilstrahlengang durchlaufenden, vom Objekt kommenden Lichts könnte keine Phasenveränderung erfahren, so dass zum Erzielen der weitgehend verlustfreien Vereinigung des vom Objekt kommenden Lichts eine ganz bestimmte, definierte Phasenbeziehung eingestellt werden muss. Diese Einstellung könnte beispielsweise derart erfolgen, dass das die beiden Teilstrahlengänge durchlaufende, vom Objekt kommende Licht an der Grenzschicht des den Detektionsstrahlengang vereinigenden Bauteils eine Phasenbeziehung aufweist, die zumindest weitgehend phasengleich oder gegenphasig ist.

In einer bevorzugten Ausführungsform ist vorgehen, dass zur Phasenbeeinflussung des die Teilstrahlengänge durchlaufenden, vom Objekt kommenden Lichts die Variation der optischen Weglänge mindestens eines Teilstrahlengangs vorgesehen ist.

Als Mittel zur Beeinflussung der Phase des vom Objekt kommenden Lichts ist in einer bevorzugten Ausführungsform ein Doppelglaskeil vorgesehen. Dieser Doppelglaskeil besteht aus zwei gegeneinander verschiebbar angeordneten Glaskeilen, deren einander zugewandten Grenzflächen mit einem Immersionsmedium, beispielsweise Öl, geeignetem Brechungsindex und geeigneter Dispersion gefüllt ist. Der in einem kollimiert verlaufenden Teilstrahlengang angeordnete Doppelglaskeil wird von dem kollimiert verlaufenden Licht senkrecht durchtreten, d.h. die Grenzschicht Luft-Glas jedes Glaskeils ist orthogonal zu dem kollimiert verlaufenden Lichtstrahl angeordnet. Wenn die beiden Glaskeile quer zur Strahlrichtung gegeneinander bewegt werden, ändert sich hierdurch die optische Weglänge durch den Doppelglaskeil, da die Luft-Glas-Grenzflächen einen kleinen Keilwinkel zu den Glas-lmmersionsmediums-Grenzflächen aufweisen. Durch die Variation der optischen Weglänge des Teilstrahlengangs, in dem der Doppelglaskeil angeordnet ist, kann die Phasenbeziehung des diesen Teilstrahlengang durchlaufenden Lichts relativ zu dem Licht des anderen Teilstrahlengangs beeinflusst bzw. variiert werden.

In einer weiteren Ausführungsform ist vorgesehen, dass das nach dem den Detektionsstrahlengang vereinigenden Bauteil in unterschiedliche Richtungen verlaufende, vom Objekt kommende Licht jeweils mit mindestens einem Detektor detektierbar ist. Hierbei ist vorgesehen, dass mit einem Detektor das zumindest weitgehend in eine Ausbreitungsrichtung vereinigte, vom Objekt kommende Licht detektiert wird. Das in eine andere Richtung verlaufende, vom Objekt kommende Licht wird mit einem weiteren Detektor detektiert. Da die Intensität bzw. Leistung dieses Detektionslichts bei einer optimalen erfindungsgemäßen Strahlvereinigung nahezu 0 sein sollte, kann das Signal dieses Detektors zur Regelung der Phasenbeziehung der beiden Detektionsteilstrahlengänge genutzt werden. Weiterhin könnten sämtliche Detektionssignale der Detektoren zur Objektauswertung gemeinsam genutzt werden. Diese Vorgehensweise ermöglicht selbst bei nicht optimaler Detektionslichtvereinigung eine Optimierung der Detektionslichtausbeute.

In einer bevorzugten Ausführungsform ist jedem Detektor eine Detektionslochblende vorgeordnet. Somit handelt es sich bei einem entsprechenden Mikroskopaufbau um ein konfokales bzw. doppelkonfokales Rastermikroskop. Die Detektionslochblende korrespondiert hierbei optisch zu dem Beleuchtungsfokus des Mikroskopobjektivs, der seinerseits zu einer Anregungslochblende optisch korrespondiert.

Falls eine Detektion von mit Mehrphotonen-Anregungsprozessen angeregtem Fluoreszenzlicht vorgesehen ist, ist den Detektoren keine Detektionslochblende vorgeordnet. Das es sich bei Mehrphotonen-Anregungsprozessen um nichtlineare Prozesse handelt, ist beispielsweise die Wahrscheinlichkeit eines Zweiphotonen-Anregungsprozesses proportional zum Quadrat der Beleuchtungsintensität. In einem durch ein Mikroskopobjektiv fokussierten Lichtstrahl ist die Beleuchtungsintensität im Fokus des Mikroskopobjektivs am höchsten, wodurch bei ausreichender Beleuchtungsintensität hauptsächlich im Beleuchtungsfokus Mehrphotonen-Anregungsprozesse induziert werden können. Bei einer konfokalen bzw. fokussierten Beleuchtung in Verbindung mit einer Mehrphotonen-Anregung von Fluoreszenzfarbstoffen kann daher das Fluoreszenzlicht mit großer Wahrscheinlichkeit nur aus aus dem Fokusbereich des Mikroskopobjektivs stammen, so dass das Einfügen einer Detektionslochblende zum Ausblenden der Bereiche außerhalb des Fokusbereichs des Mikroskopobjektivs nicht erforderlich ist.

Es gibt nun verschiedene Möglichkeiten, die Lehre der vorliegenden Erfindung in vorteilhafter Weise auszugestalten und weiterzubilden. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: eine schematische Darstellung eines doppelkonfokalen Rastermikroskops,
- Fig. 2: eine schematische Darstellung eines ersten Ausführungsbeispiels eines erfindungsgemäßen doppelkonfokalen Rastermikroskops,
- Fig. 3: eine schematische Darstellung der Transmissions- bzw. Reflexionsverhältnisse bei dem den Detektionsstrahlengang vereinigenden Bauteil und
- Fig. 4: eine schematische Darstellung der Transmissions- und Reflexionsverhältnisse des spiegelverkehrt angeordneten Bauteils aus Fig. 3.

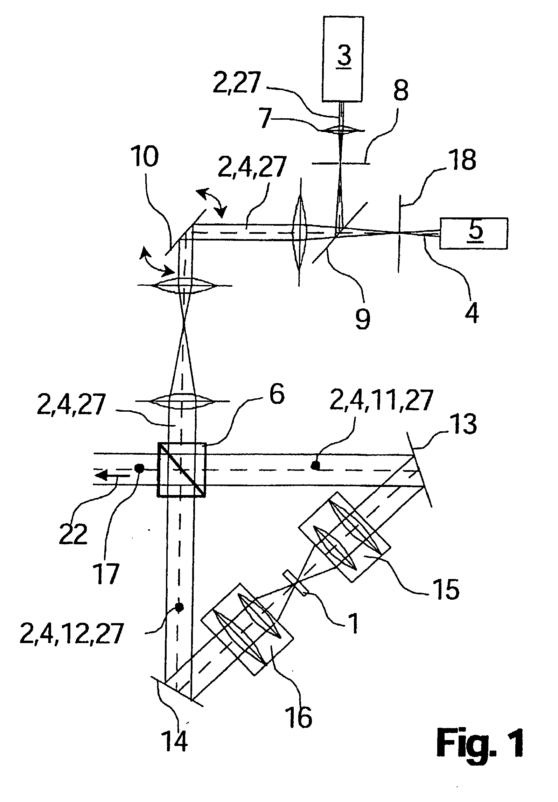

Fig. 1 zeigt eine optische Anordnung zum Beleuchten von Objekten 1 in Verbindung mit einem doppelkonfokalen Rastermikroskop. Die optische Anordnung umfasst einen Beleuchtungsstrahlengang 2 einer Lichtquelle 3, einen Detektionsstrahlengang 4 eines Detektors 5 und ein den Detektionsstrahlengang 4 vereinigendes Bauteil 6.

Das zur Beleuchtung des Objekts 1 dienende Beleuchtungslicht 27 der Lichtquelle 3 wird über eine Linse 7 auf die Anregungslochblende 8 abgebildet. Das die Anregungslochblende 8 passierende Licht wird von dem dichroitischen Strahlteiler 9 in Richtung einer Strahlablenkvorrichtung 10 reflektiert. Die Strahlablenkvorrichtung 10 scannt den Beleuchtungslichtstrahl 27 in zwei im Wesentlichen senkrecht zueinander stehenden Richtungen. Der von der Strahlablenkvorrichtung 10 reflektierte und gescannte Lichtstrahl trifft auf das Bauteil 6, wo es in zwei Teilstrahlen 11, 12 aufgeteilt wird. Das die beiden Teilstrahlen durchlaufende Beleuchtungslicht wird an den Spiegeln 13, 14 reflektiert und über die Mikroskopobjektive 15, 16 von beiden Seiten aus in den gleichen Objektpunkt des Objekts 1 fokussiert. Das Ablenken des Beleuchtungslichtstrahls 27 von der Strahlablenkvorrichtung 10 bewirkt eine Ortsänderung der Beleuchtungsfokusse der beiden Mikroskopobjektive 15, 16, so dass das Objekt 1 zweidimensional in der Fokalebene beleuchtet werden kann.

Das lediglich schematisch gezeichnete Objekt 1 ist mit Fluoreszenzmarkern spezifisch markiert. Das durch das Beleuchtungslicht 27 induzierte Fluoreszenzlicht, dass von den beiden Mikroskopobjektiven 15, 16 aufgesammelt wird, durchläuft den Beleuchtungsstrahlengang 2 in umgekehrter Richtung. Das vom Mikroskopobjektiv 15 aufgesammelte Fluoreszenzlicht wird vom Spiegel 13 in Richtung des den Detektionsstrahlengang 4 vereinigenden Bauteils 6 reflektiert. Ein Teil dieses Fluoreszenzlichts passiert das Bauteil 6 unabgelenkt, das als Lichtstrahl 17 aus dem Bauteil 6 austritt. Der andere Teil des den Teilstrahlengang 11 durchlaufenden Fluoreszenzlichts wird am Bauteil 6 in Richtung der Strahlablenkvorrichtung 10 reflektiert, so dass dieses Fluoreszenzlicht letztendlich von dem Detektor 5 detektiert werden kann. Das vom Mikroskopobjektiv 16 aufgesammelte Fluoreszenzlicht wird vom Spiegel 14 in Richtung des Bauteils 6 reflektiert. Ca. 50 Prozent des den Teilstrahlengang 12 durchlaufenden Fluoreszenzlichts wird am Bauteil 6 in Richtung 22 aus dem Detektionsstrahlengang 4 herausreflektiert. Das restliche Fluoreszenzlicht passiert das Bauteil 6 und wird über die Strahlablenkvorrichtung 10, den dichroitischen Strahlteiler 9 in Richtung der Detektionslochblende 18 geleitet. Lediglich wenn Fluoreszenzlicht aus dem Beleuchtungsfokus der beiden Mikroskopobjektive 15, 16 stammt, kann dieses Fluoreszenzlicht die Detektionslochblende 18 passieren, da die Detektionslochblende 18 gemäß dem konfokalen Prinzip in einer zum Beleuchtungsfokus der beiden Mikroskopobjektive 15, 16 optisch korrespondierenden Ebene angeordnet ist. In gleicher Weise ist das Anregungspinhole 8 in einer optisch korrespondierenden Ebene zu dem gemeinsamen Beleuchtungsfokus der beiden Mikroskopobjektive 15, 16 angeordnet.

Das aus den Detektionsstrahlengang 4 austretende Fluoreszenzlicht 17 kann dem Detektor 5 nicht zugeführt werden. Demgemäß gehen bei der Detektion des vom Objekt 1 kommenden Fluoreszenzlichts ca. 50 Prozent verloren, da dieses verlorene Fluoreszenzlicht nicht von dem Detektor 5 nachgewiesen werden kann.

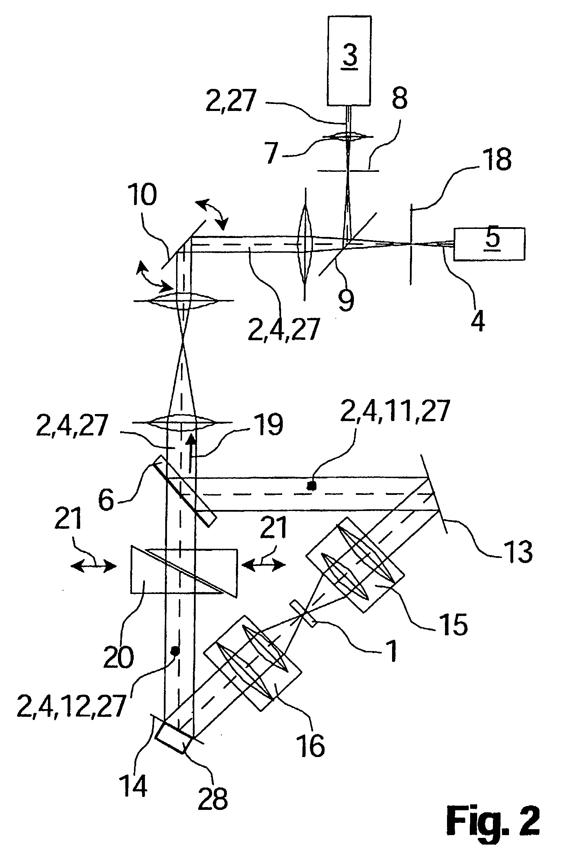

Erfindungsgemäß wird das vom Objekt 1 kommende Licht dem den Detektionsstrahlengang 4 vereinigenden Bauteil 6 zumindest weitgehend in eine Ausbreitungsrichtung 19 vereinigt, was Fig. 2 entnehmbar ist. Hierbei sind Mittel 20 zur Beeinflussung der Phase des vom Objekt 1 kommenden Lichts vorgesehen, die in dem Teilstrahlengang 12 des Detektionsstrahlengangs 4 angeordnet sind.

Das Bauteil 6 der Fig. 2 ist zur zumindest weitgehend verlustfreien Vereinigung des vom Objekt 1 kommenden Lichts in eine Ausbreitungsrichtung 19 derart ausgestaltet und im Strahlengang 4 angeordnet, dass es einen entsprechenden Reflexions- und Transmissionsgrad aufweist. Für das Beleuchtungslicht 27 weist das Bauteil 6 einen Transmissionsgrad von 0,5 auf, so dass das Beleuchtungslicht in die beiden Teilstrahlengänge 11, 12 in gleicher Intensität aufgespalten werden kann. Hinsichtlich der zumindest weitgehend verlustfreien Vereinigung des vom Objekt 1 kommenden Fluoreszenzlichts der beiden Teilstrahlengänge 11, 12 ist das Bauteil 6 im Strahlengang 4 derart angeordnet, dass das die Teilstrahlengänge 11 und 12 durchlaufende Fluoreszenzlicht in die durch den Pfeil 19 angedeutete Ausbreitungsrichtung geleitet wird. Das Bauteil 6 weist hinsichtlich des Beleuchtungslichts 2 sowie des vom Objekt 1 kommenden Fluoreszenzlichts einen Einfallswinkel von jeweils 45 Grad auf.

Die optischen Weglängen der Teilstrahlengänge 11, 12 sind derart aufeinander abgestimmt, dass das die Teilstrahlengänge 11, 12 durchlaufende, vom Objekt 1 kommende Licht zumindest weitgehend phasengleich an dem Bauteil 6 ankommt. Ein Feinabgleich der optischen Weglänge der beiden Teilstrahlengänge 11, 12 wird durch eine Positionsvariation des Spiegels 14 durchgeführt, indem der Spiegel 14 orthogonal zu seiner Oberfläche vom Piezoelement 28 verschoben werden kann.

Das Mittel 20 zur Beeinflussung der Phase des vom Objekt 1 kommenden Lichts ist in Form eines Doppelglaskeils realisiert. Der Doppelglaskeil 20 ist im Teilstrahlengang 12 angeordnet. Das im Teilstrahlengang 12 parallel verlaufende Licht durchtritt die Luft-Glas-Grenzflächen des Doppelglaskeils 20 orthogonal. Zwischen den beiden Doppelglaskeilen befindet sich Immersionsöl, das nahezu den gleichen Brechungsindex und die gleiche Dispersion aufweist, wie das Glas der beiden Glaskeile. Die beiden Glaskeile des Doppelglaskeils 20 können jeweils entlang der Richtung 21 gegeneinander verschoben werden, so dass hierdurch die optische Weglänge des Doppelglaskeils verändert werden kann.

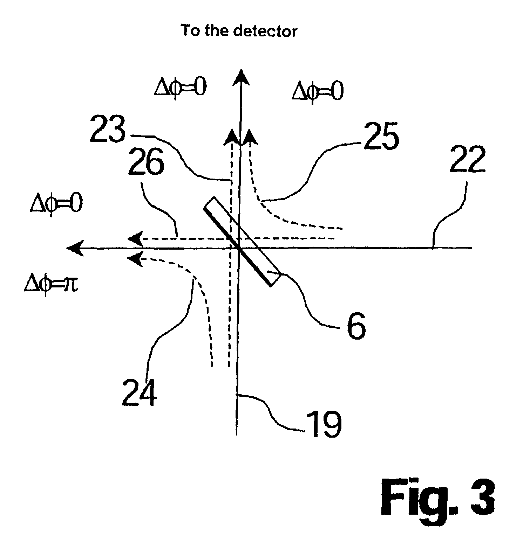

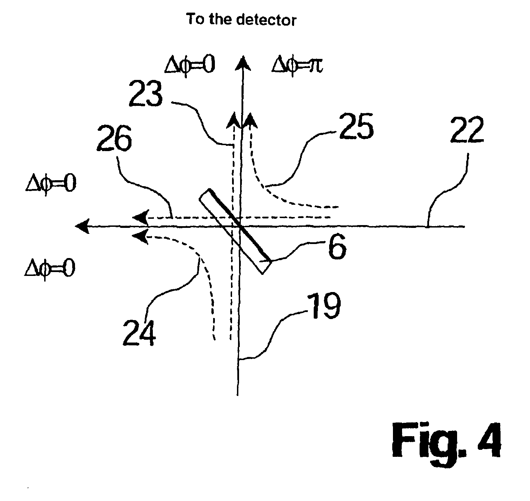

In Fig. 3 ist schematisch dargestellt, dass das die unterschiedlichen Teilstrahlengänge 11, 12 durchlaufende Fluoreszenzlicht an dem Bauteil 6 lediglich in einem Fall einen Phasensprung von 180 Grad erfährt. Die beiden Pfeile 19, 22 zeigen die Ausbreitungsrichtung zum Detektor 5 bzw. die Ausbreitungsrichtung des Teilstrahls 17 an. Das den Teilstrahlengang 12 durchlaufende Fluoreszenzlicht weist einen durch das Bauteil 6 transmittierten Anteil 23 und einen am Bauteil 6 reflektierten Anteil 24 auf. Das den Teilstrahlengang 11 durchlaufende Fluoreszenzlicht weist einen am Bauteil 6 in Richtung zum Detektor 5 reflektierten Anteil 25 und einen durch das Bauteil 6 transmittierten Anteil 26 in Richtung 22 auf. Lediglich der an dem Bauteil 6 reflektierte Anteil 24 des den Teilstrahlengang 12 durchlaufenden Fluoreszenzlichts weist ein Phasensprung von 180 Grad π) auf. Die Anteile 23, 25, 26 weisen keinen Phasensprung auf. Fig. 4 zeigt die gleichen Anteile des vom Objekt 1 kommenden Fluoreszenzlichts 23, 24, 25, 26, die an dem Bauteil 6 reflektiert werden oder durch das Bauteil 6 hindurchtreten. Im Gegensatz zu Fig. 3 ist das Bauteil 6 derart angeordnet, dass seine dielektrische Hybridschicht den Anteilen 25, 26 zugeordnet sind, die den Teilstrahlengang 11 durchlaufen. Demgemäß weist lediglich der am Bauteil 6 reflektierte Anteil 25 einen Phasensprung von 180 Grad auf. In erfindungsgemäßer Weise ist mit dem Mittel 20 die Phasenbeziehung des die Teilstrahlengänge 11, 12 durchlaufenden Fluoreszenzlichts derart einzustellen, dass die durch das Bauteil 6 der Fig. 2 transmittierten Anteile 26 bzw. die am Bauteil 6 der Fig. 2 reflektierten Anteile 24 sich auslöschen.

## Patentansprüche

1. Optische Anordnung zum Beleuchten von Objekten (1), insbesondere von Fluoreszenzobjekten, in Verbindung mit einem doppelkonfokalen Rastermikroskop, mit einer Lichtquelle (3) die einen Beleuchtungsstrahlengang (2) definiert, einem Detektor (5), der einen Detektionsstrahlengang (4) definiert, der einen für den Detektor (5) wirksamen Strahlquerschnitt aufweist und das vom Objekt kommende Licht umfasst, und einem Bauteil (6), das den Beleuchtungsstrahlengang In zwei Teilstrahlen aufteilt bzw. die Teilstrahlen des Detektionsstrahlengangs (4) vereinigt, wobei das vom Objekt (1) in den Teilstrahlen kommende Fluoreszenzlicht an dem den Detektionsstrahlengang (4) vereinigenden Bauteil (6) bezüglich des für den Detektor wirksamen Strahlquerschnitts zumindest weitgehend überlappend in eine Ausbreitungsrichtung (19) vereinigbar ist und wobei Mittel (20) zur Beeinflussung der Phase des vom Objekt (1) kommenden Fluoreszenzlicht vorgesehen sind, die zumindest In einem Teilstrahlengang (12) des Detektionsstrahlengangs (4) angeordnet sind, **dadurch gekennzeichnet, dass** das den Detektlonsstrahtengang vereinigende Bauteil so ausgestaltet ist, dass bei der Reflexion von Licht aus einem Teilstrahlengang ein Phasensprung von 180 Grad auftritt und bei der Reflexion von Licht aus dem anderen Teilstrahlengang kein Phasensprung auftritt und dass das Bauteil (6), das den Beleuchtungsstrahlengang aufteilt bzw. den Detektionsstrahlengang (4) vereinigt und die Mittel (20) zur Beeinflussung der Phase derart ausgestaltet sind, dass das vom Objekt kommende Detektionslicht, das am vereinigenden Bauteil ankommt und dort konstruktiv interferiert sich in Richtung (19) des Detektors ausbreitet, und dass sich In die andere Richtung (22) entsprechend nahe zu kein oder kein Detektionslicht ausbreitet, da für diese Ausbreitungsrichtung destruktive interferenz vorliegt.

2. Vorrichtung nach Anspruch 1, **dadurch gekennzeichnet, dass** mindestens ein Bauteil zur zumindest weitgehend verlustfreien Vereinigung des vom Objekt (1) kommenden Fluoreszenzlichts in eine Ausbreitungsrichtung (19) derart ausgestaltet und/oder Im Strahlengang (4) angeordnet ist, dass es einen entsprechenden Reflexions- und/oder Transmissionsgrad aufweist

3. Vorrichtung nach Anspruch 1 oder 2, **dadurch gekennzeichnet, dass** mindestens ein Bauteil zur zumindest weitgehend verlustftelen Vereinigung des vom Objekt (1) kommenden Fluoreszenzlichts in eine Ausbreitungsrichtung (19) derart im Strahlengang angeordnet Ist, dass auf das Bauteil auftreffende Licht einen entsprechenden Einfallswinkel aufweist.

4. Vorrichtung nach einem der Ansprüche 1 bis 3, **dadurch gekennzeichnet, dass** mindestens ein Bauteil zur zumindest weitgehend verlustfrelen Vereinigung des vom Objekt (1) kommenden Fluoreszenzlichts in eine Ausbreitungsrichtung (19) derart ausgestaltet und/oder im Strahlengang angeordnet ist, dass hierdurch ein entsprechender Phasenabgleich erzielbar ist.

5. Vorrichtung nach einem der Ansprüche 1 bis 4, **dadurch gekennzeichnet, dass** das Bauteil ein metallisch oder dielektrisch beschichtetes Bauteil ist.

6. Vorrichtung nach einem der Ansprüche 1 bis 5, **dadurch gekennzeichnet, dass** das Bauteil (6) ein mit dielektrischer oder metallisch-dielektrischer Hybridbeschichtung versehenes Bauteil ist.

7. Vorrichtung nach einem der Ansprüche 1 bis 6, **dadurch gekennzeichnet, dass** die Strahlteileranordnungen derart ausgestaltet und/oder im Strahlengang angeordnet sind, dass das Tellungs- und/oder Vereinigungsverhältnis für s- und p-polarisiertes Licht nahezu gleich ist.

8. Vorrichtung nach einem der Ansprüche 1 bis 7, **dadurch gekennzeichnet, dass** als Mittel (20) zur Beeinflussung der Phase des vom Objekt (1) kommenden Lichts ein Doppelglaskeil vorgesehen ist.

9. Vorrichtung nach einem der Ansprüche 1 bis 8, **dadurch gekennzeichnet, dass** den Detektoren bei der Detektion von mit Mehrphotonen-Anregungsprozessen angeregtem Fluoreszenzlicht keine Detektionslochblende vorgeordnet ist.

## Claims

1. Optical arrangement for illuminating objects (1), in particular fluorescent objects, in conjunction with a double-confocal scanning microscope, having a light source (3) which defines an illuminating beam path (2), a detector (5) which defines a detection beam path (4), which has a cross section active for the detector (5) and includes the light coming from the object, and a component (6) which splits the illuminating beam path into two partial beams and/or unites the partial beams of the detection beam path (4), it being possible, with reference to the beam cross section active for the detector, for the fluorescent light coming in the partial beams from the object (1) to be united at least largely in an overlapping fashion into one propagation direction (19) at the component (6) uniting the detection beam path (4), and there being provided for influencing the phase of the fluorescent light coming from the object (1) means (20) which are arranged at least in a partial beam path (12) of the detection beam path (4), **characterized in that** the component uniting the detection beam path is configured such that in the case of the reflection of light from one partial beam path a phase jump of 180 degrees occurs and in the case of the reflection of light from the other partial beam path no phase jump occurs, **in that** the component (6) which splits the illuminating beam path and/or unites the detection beam path (4), and the means (20) for influencing the phase are configured in such a way that the detection light coming from the object, which arrives at the uniting component and interferes constructively there, propagates in the direction (19) of the detector, and **in that** there is correspondingly virtually no, or no propagation of light in the other direction (22), since destructive interference obtains for this propagation direction.

2. Device according to Claim 1, **characterized in that** at least one component is configured for the purpose of uniting, in an at least largely loss-free fashion, the fluorescent light coming from the object (1) into one propagation direction (19), and/or is arranged in the beam path (4) in such a way that it has an appropriate reflectance and/or transmittance.

3. Device according to Claim 1 or 2, **characterized in that** at least one component is arranged for the purpose of uniting, in an at least largely loss-free fashion, the fluorescent light coming from the object (1) into one propagation direction (19) in the beam path in such a way that light striking the component has an appropriate angle of incidence.

4. Device according to one of Claims 1 to 3, **characterized in that** at least one component is configured for the purpose of uniting, in an at least largely loss-free fashion, the fluorescent light coming from the object (1) into one propagation direction (19), and/or is arranged in the beam path in such a way that it is thereby possible to achieve an appropriate phase matching.

5. Device according to one of Claims 1 to 4, **characterized in that** the component is a component with a metal or dielectric coating.

6. Device according to one of Claims 1 to 5, **characterized in that** the component (6) is a component provided with a dielectric or metal-dielectric hybrid coating.

7. Device according to one of Claims 1 to 6, **characterized in that** the beam splitter arrangements are configured and/or arranged in the beam path in such a way that the splitting and/or recombination ratios for s- and p-polarized light are virtually equal.

8. Device according to one of Claims 1 to 7, **characterized in that** a double glass wedge is provided as means (20) for influencing the phase of the light coming from the object (1).

9. Device according to one of Claims 1 to 8, **characterized in that** in the case of the detection of fluorescent light excited by multiphoton excitation processes, no detection pinhole diaphragm is arranged upstream of the detectors.

## Revendications

1. Dispositif optique pour l'illumination d'objets (1), en particulier d'objets fluorescents, en liaison avec un microscope à balayage confocal double, avec une source de lumière (3) qui définit un trajet de rayons d'illumination (2), un détecteur (5) qui définit un trajet de rayons de détection (4), qui présente une section transversale de rayon utile pour le détecteur (5) et qui comprend la lumière provenant de l'objet, et un composant (6) qui divise le trajet de rayons d'illumination en deux rayons partiels ou selon le cas qui réunit les rayons partiels du trajet de rayons de détection (4), dans lequel la lumière fluorescente provenant de l'objet (1) dans les rayons partiels peut être réunie dans le composant (6) réunissant le trajet de rayons de détection (4), au moins avec un large recouvrement en ce qui concerne la section transversale utile pour le détecteur, dans une direction de propagation (19) et dans lequel il est prévu des moyens (20) pour influencer la phase de la lumière fluorescente provenant de l'objet (1), qui sont disposés au moins dans un trajet de rayons partiels (12) du trajet de rayons de détection (4), **caractérisé en ce que** le composant réunissant le trajet de rayons de détection est conçu de telle manière qu'il se produise un saut de phase de 180° lors de la réflexion de lumière d'un trajet de rayons partiels et qu'il ne se produise pas de saut de phase lors de la réflexion de lumière de l'autre trajet de rayons partiels, et **en ce que** le composant (6), qui divise le trajet de rayons d'illumination ou selon le cas qui réunit le trajet de rayons de détection (4), et les moyens (20) pour influencer la phase sont conçus de telle manière que la lumière de détection provenant de l'objet, qui arrive au composant de réunion et y interfère de manière constructive, se propage en direction (19) du détecteur, et qu'aucune ou pratiquement aucune lumière de détection ne se propage de manière correspondante dans l'autre direction (22), parce qu'il se produit une interférence destructive pour cette direction de propagation.

2. Dispositif selon la revendication 1, **caractérisé en ce qu'**au moins un composant pour la réunion au moins largement sans pertes de la lumière fluorescente provenant de l'objet (1) dans une direction de propagation (19) est conçu et/ou disposé dans le trajet de rayons (4) de telle manière qu'il présente un niveau de réflexion et/ou de transmission correspondant.

3. Dispositif selon la revendication 1 ou 2, **caractérisé en ce qu'**au moins un composant pour la réunion au moins largement sans pertes de la lumière fluorescente provenant de l'objet (1) dans une direction de propagation (19) est disposé dans le trajet de rayons de telle manière que la lumière atteignant le composant présente un angle d'incidence correspondant.

4. Dispositif selon l'une quelconque des revendications 1 à 3, **caractérisé en ce qu'**au moins un composant pour la réunion au moins largement sans pertes de la lumière fluorescente provenant de l'objet (1) dans une direction de propagation (19) est conçu et/ou disposé dans le trajet de rayons de telle manière que l'on puisse ainsi produire un équilibrage de phase correspondant.

5. Dispositif selon l'une quelconque des revendications 1 à 4, **caractérisé en ce que** le composant est un composant à revêtement métallique ou diélectrique.

6. Dispositif selon l'une quelconque des revendications 1 à 5, **caractérisé en ce que** le composant (6) est un composant pourvu d'un revêtement hybride diélectrique ou métallique-diélectrique.

7. Dispositif selon l'une quelconque des revendications 1 à 6, **caractérisé en ce que** les dispositifs de division de rayons sont conçus et/ou disposés dans le trajet de rayons de telle manière que le rapport de division et/ou de réunion soit pratiquement le même pour une lumière à polarisation s et à polarisation p.

8. Dispositif selon l'une quelconque des revendications 1 à 7, **caractérisé en ce qu'**il est prévu un coin de verre double comme moyen (20) pour influencer la phase de la lumière provenant de l'objet (1).

9. Dispositif selon l'une quelconque des revendications 1 à 8, **caractérisé en ce qu'**aucun écran perforé de détection n'est disposé en amont des détecteurs lors de la détection de lumière fluorescente excitée par des processus d'excitation à photons multiples.
